# EUROPEAN PATENT SPECIFICATION

(11) **EP 0 520 785 B1**
(45) Date of publication and mention of the grant of the patent: **28.08.1996**
(21) Application number: 92305839.0
(22) Date of filing: 25.06.1992
(51) Int. Cl.: A01N 37/02, B27K 3/38

(54) **A biocide composition**
Biozide Zusammensetzung
Composition biocide

(30) Priority: 28.06.1991 FI 913156
(43) Date of publication of application: 30.12.1992
(73) Proprietor: FINNISH CHEMICALS OY, SF-32741 Äetsä (FI)
(72) Inventor: Linderborg, Irma, SF-45700 Kuusankoski (FI)
(74) Representative: Jennings, Nigel Robin

(56) References cited:
- DE-A- 3 723 994
- FR-A- 2 523 404
- RESEARCH DISCLOSURE, vol. 230, no. 21, 1983, Havant Hamshire (GB); ANONYMOUS, pp. 224-225
- CHEMICAL ABSTRACTS, vol. 76, no. 1, 3 January 1972, Columbus, OH (US); F. FUJIKAWA et al., p. 236, no. 2525t

## Description

The invention relates to enhancing the effect of a commercially available wood preserving chemical combatting blue stain fungi when used against mould fungi in freshly cut wood.

It has been found that freshly cut wood easily starts moulding when stored for long periods under hard conditions (a high outer temperature and a high relative humidity) even if treated with an anti-blue stain agent which also has a mould fungi-combatting effect. At Finnish sawmills, which use artificial drying, the wood is usually preserved only during the intermediate storage. Thus, the required preserving action is relatively short, and the climatic conditions are not especially hard.

The wood preserving chemical on which the invention is based has been defined in the Finnish patent specification 67011. It contains quartenary ammonium salt and the Na-salt of 2-ethyl hexane acid as active ingredients. This known wood preserving agent primarily prevents blue stain attacks, but is not equally efficient as an anti-mould agent. For this reason, the object of the invention is to enhance the action against mould fungi of the wood preserving agents according to the patent specification 67011. It may be necessary to use such an enhanced wood preserving agent to prevent mould growth under particularly favourable growth conditions, when using the agent for instance in subtropical or tropical regions or during long storage.

The enhanced preserving effect may be achieved for instance by adding an appropriate fungicide to the above commercially available preserving agent. It is known that phenols and their alkali salts are are extremely toxic to microbes, including mould fungi. Chlorinated phenols, which otherwise would be effective anti-mould agents, are no longer desirable because of their damaging effect on the environment and the ergonomic conditions. The less damaging sodium salt of phenoxy phenol (= 2-phenyl phenol), known as an anti-mould agent, was selected as object of the investigation. Phenoxy phenol is used in cosmetics and as an anti-mould agent for citrus fruits, among others.

It was unexpectedly found that certain mixtures of sodium phenoxy phenolate and the commercial preserving chemical of the patent specification 67011 prevented mould growth synergistically. Their joint effect was greater than what could be expected in terms of the component concentrations, and this indicates a synergy. The active ingredients of the composition according to the invention are dissolved in water containing sodium hydroxide so that the active ingredients remain well dissolved.

The essential features of the invention are presented in the attached claims.

The moulds of the Trichoderma strain are very common wood destroyers, and the mixture according to the invention proved effective for combatting these. The mixture can also be used at sawmills for the disinfection of wood dryers, since sodium phenoxy phenolate evaporates in the airspace of dryers and preserves the constructions.

The invention is described in further detail below with reference to the examples.

### Example 1

### Miniboard tests

The test was carried out with so-called miniboards made of fresh pine surface wood. The testing method complied with the Nordic standard N.T.R. 1.4.1.3./79.

The fungi used for the implantation were:
1) Blue stain fungi:
   Aureobasidium pullulans
   Ceratocystis piliformis
   Schleroderma entoxylina
2) Mould fungi:
   Aspergillus versicolor
   Cladosporium sphaerospermum
   Penicillium sp.

The preserving agent solutions to be examined contained the known B5 wood preserving chemical according to the patent 67011 B5, the active ingredient of which includes 35% of trimethyl coconut ammonium chloride and 65% of Na-2-ethyl hexanate as well as Na-phenoxy phenolate (Na-OFF) as such or as mixtures.

10x50x300 mm miniboards implanted with mould and blue stain fungi germs and treated with preserving agent solutions were incubated during 16 weeks at a temperature of 23°C and a 100% humidity. Five miniboards were implanted for each preserving agent solution. The fungi growth was visually assessed at intervals of three weeks.

Ultimately moulds of the Trichoderma strain grew wild on the boards implanted with the blue stain fungi, and among these Trichoderma viride and Trichoderma harzianum were identified. These are serious wood destroyers, which have spread world-wide. The test results are shown in table 1. The figures in the table denote the average of the summed effect points of 5 miniboards. The visual assessment was conducted by giving effect points ranking from one to four as follows:
0-1 very good
1-2 average
2-3 poor
3-4 very poor

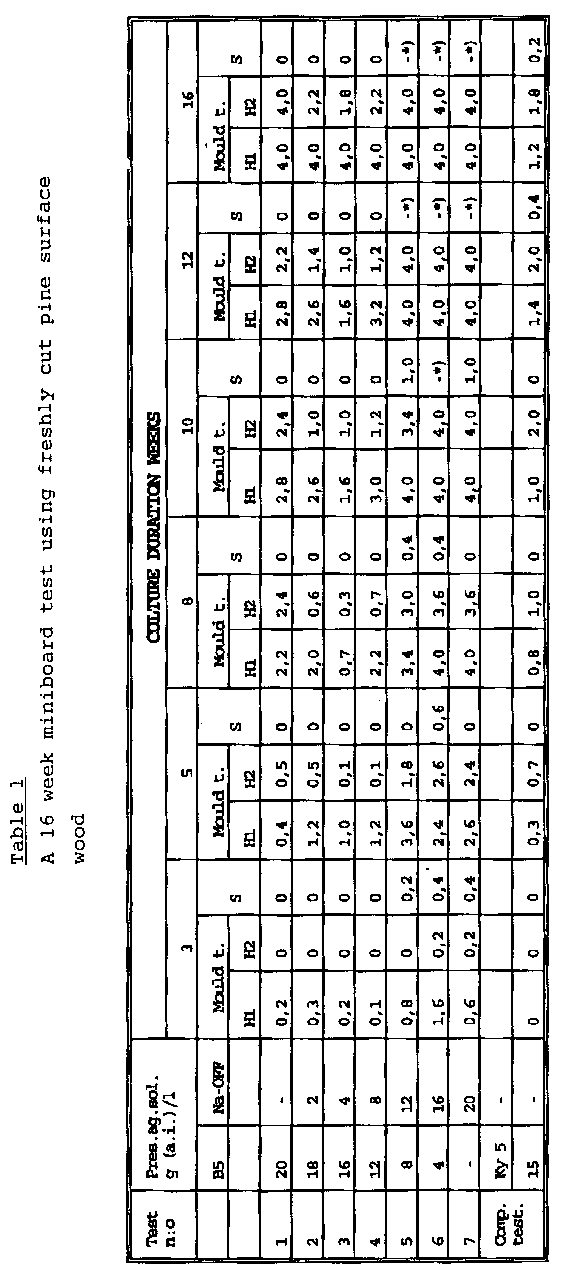

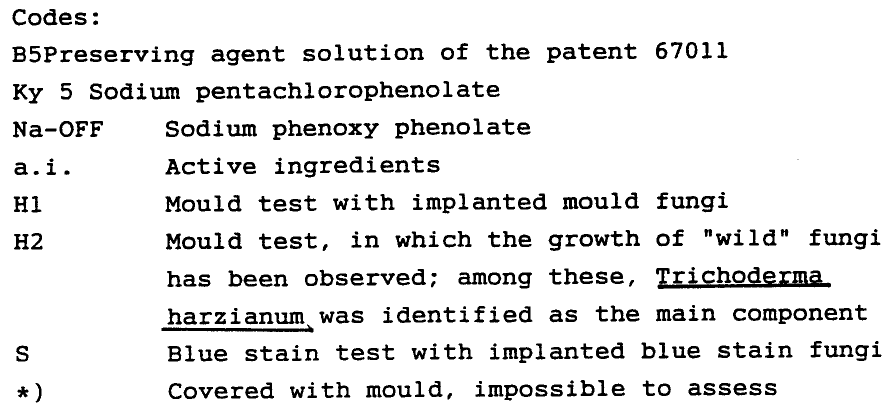

The test results showed a very distinct synergy especially with regard to the Trichoderma harzianum mould cultures with long culture durations. The three weeks requisited by the standard did not yet necessarily reveal any differences between the various preserving agent concentrations. A synergy could be observed also in miniboards implanted with a known fungi germ mixture.

It was concluded from these tests, that 10-40% of Na-phenoxy phenolate should be added to the examined wood preserving agent B5, the preferable addition being 20% of the total weight of the active ingredients. The product obtained is appropriate as an anti-mould agent for freshly cut wood as well as for the disinfection of dryers at sawmills. However, the proportion of phenoxy phenolate should not be increased above the recommended limit of 40%, the effect of the mixture being then weakened with regard to the blue stain fungi.

### Example 2

### Bowl culture tests

Trichoderma inhamatum, which is an intermediate form of Trichoderma hamatum and Trichoderma harzianum, was isolated and identified from moulded boards treated with the preserving agent B5 of the patent 67011. This fungi stem was used as an implant in poison resistance tests, which were conducted in Petri bowls on a potatoe dextrose substrate (five paralell bowls). The germ concentration of the implant was 6 x 10⁶ pieces/ml, the culture duration was three weeks and the culture temperature was 20°C. Varying amounts of Na-phenoxy phenolate as indicated under table 1 and/or of the above preserving agent had been added to the substrates in order to examine whether these agents form synergistic mixtures impeding the growth of the mould fungus.

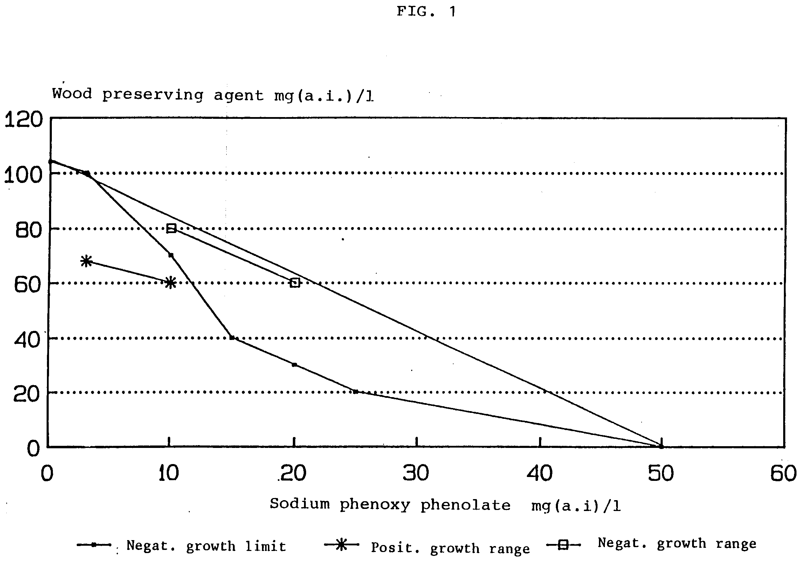

The bowls were cultured at a temperature of 20°C for three weeks, at the end of which the possible growth was checked. The results are shown in table 2 and figure 1.

**Table 2**

| Trichoderma inhamatum culture tests in Petri bowls 20°C | | | | | | | | | | | | | |
|---|---|---|---|---|---|---|---|---|---|---|---|---|---|
| B5 mg (a.i.)/l | Na-OFF mg/l | | | | | | | | | | | | |
| | 0 | 1 | 3 | 4 | 5 | 10 | 15 | 20 | 25 | 30 | 40 | 45 | 50 |
| 110 | - | | | | | | | | | | | | |
| 108 | - | | | | | - | | | | | | | |
| 104 | - | - | - | - | | - | | | | | | | |
| 102 | + | | | | | - | | | | | | | |
| 100 | + | + | - | - | | - | | | | | | | |
| 90 | + | | | | | - | | | | | | | |
| 80 | + | | | | | - | | - | | | | | |
| 70 | + | | | | | (-) | | - | | | | | |
| 68 | + | + | + | - | | | | | | | | | |
| 64 | + | + | + | | | | | | | | | | |
| 60 | + | + | + | | | + | | - | | | | | |
| 56 | + | + | + | | | | | | | | | | |
| 50 | + | | | | | + | | - | | | | | |
| 40 | + | | | | | | - | | - | | | | |
| 30 | + | | | | | | | - | | - | | | |
| 20 | + | | | | | | | | - | | - | | |
| 10 | + | | | | | | | | | | | | |
| 0 | + | + | + | + | + | + | | + | + | + | + | + | - |
| + = growth in the Petri bowl - = no growth in the Petri bowl (-)= slight traces of growth | | | | | | | | | | | | | |

The results clearly indicate that the additions of Na-2-phenoxy phenolate also prevented the growth of the T.inhamatum fungi on nutrient substrates containing the B5 preserving agent synergistically. The synergy appeared clearly in nutrient substrates containing c. 60-20 mg of the B5 preserving agent and c. 15-40 mg of Na-phenoxy phenolate in a liter, preferably c. 20 mg of the B5 preserving agent and c. 25 mg of Na-phenoxy phenolate in a liter.

### Example 3

### Anti-mould test

Mould test 3 according to the N.T.R. standard was carried out on miniboards with an incubation period of 3 weeks. Subsequently, the boards were washed and treated with preserving agent solutions, which contained the B5 preserving agent of the patent 67011 or Na-phenoxy phenolate or mixtures of these. The boards were wrapped in plastic and were preserved in an incubator at 37°C for 2 weeks. The mould growth was observed by examining the boards daily at first and less frequently later. Finally the boards were preserved at a temperature of 23-25°C for 2-3 months in all. The results are given in table 3.

**Table 3**

| Test | Examined preserving agent | Total act. ingr. concentr.% of the treatment solution | Preservation time (days) | | | | | | | | |
|---|---|---|---|---|---|---|---|---|---|---|---|
| | | | 4 | 5 | 7 | 8 | 16 | 23 | 31 | 60 | 90 |
| 1 | B5 | 2,0 | | (+) | | + | + | + | + | + | ++ |
| 2 | Na-OFF | 2,0 | | (-) | | (+) | + | +(+) | | ++ | |
| 3 | O-test | - | | + | | + | ++ | ++ | | ++ | |
| 4 | B5 + | | | | | | | | | | |
| | Na-OFF (90:10) | 2,0 | - | | - | - | | | + | | +(+) |
| 5 | B5 + | | | | | | | | | | |
| | Na-OFF (80:20) | 2,0 | - | | - | - | | | - | | + |
| + = clearly observable mould colonies +(+) = a relatively great amount of mould (10-20% of the board area) ++ = abundant mould growth (50% of the board area) +++ = very much mould (the entire board) - = no mould growth | | | | | | | | | | | |

The results indicate that an active ingredient combination containing 20% of Na-phenoxy phenolate provided the best preservation of the boards. The B5 preserving agent solution, having a 2% active ingredient concentration, was clearly better than the corresponding 2 % Na-phenoxy phenolate, but still poorer than 10% and 20% mixtures of these agents.

## Claims

1. A long-term fungicidal composition impeding the growth of micro-organisms, characterised in that it contains trimethyl coconut ammonium chloride and the Na-salt of 2-ethyl hexane acid, as well as Na-phenoxy phenolate as a synergistic additive.

2. A composition according to claim 1, characterised in that the content of Na-phenoxy phenolate is 10-40% preferably about 20%, of the total weight of the active ingredients.

3. A composition according to claim 2, characterised in that the total amount of active ingredients in the composition is at most 40% by weight.

4. A composition according to claim 1, 2 or 3, characterised in that the active ingredients are dissolved in water containing sodium hydroxide, whereby the active ingredients remain well dissolved.

5. The use of the composition according to any one of claims 1-4 for preserving cut wood against mould and blue stain fungi.

6. The use of the composition according to any one of claims 1-4 for the preservation of sawmill dryers against mould attacks.

## Patentansprüche

1. Langwirkende fungizide Zusammensetzung, durch die das Wachstum von Mikroorganismen behindert wird, dadurch gekennzeichnet, daß sie Cocosfettsäuretrimethylammoniumchlorid und das Na-Salz der 2-Ethylhexansäure sowie Na-Phenoxyphenolat als synergistisches Additiv enthält.

2. Zusammensetzung nach Anspruch 1, dadurch gekennzeichnet, daß der Gehalt an Na-Phenoxyphenolat 10-40 %, vorzugsweise etwa 20 % des Gesamtgewichts der Wirkstoffe beträgt.

3. Zusammensetzung nach Anspruch 2, dadurch gekennzeichnet, daß die Gesamtmenge an Wirkstoffen in der Zusammensetzung höchstens 40 Gew.-% beträgt.

4. Zusammensetzung nach Anspruch 1, 2 oder 3, dadurch gekennzeichnet, daß die Wirkstoffe in Natriumhydroxid enthaltendem Wasser gelöst sind, wodurch die Wirkstoffe gut gelöst bleiben.

5. Verwendung der Zusammensetzung gemäß irgendeinem der Ansprüche 1-4 zur Konservierung von Schnittholz gegen Schimmel und Bläuepilze.

6. Verwendung der Zusammensetzung gemäß irgendeinem der Ansprüche 1-4 zum Schutz von Sägemühlentrocknern gegen Schimmelbefall.

## Revendications

1. Composition fongicide à long terme empêchant la croissance de micro-organismes, caractérisée en ce qu'elle contient du chlorure de triméthylammonium de noix de coco et le sel sodique de l'acide 2-éthylhexanoïque, de même que du phénoxyphénolate de sodium en tant qu'additif synergique.

2. Composition selon la revendication 1, caractérisée en ce que la teneur en phénoxyphénolate de sodium représente 10 à 40 %, de préférence environ 20 %, du poids total des principes actifs.

3. Composition selon la revendication 2, caractérisée en ce que la quantité totale de principes actifs dans la composition est au plus de 40 % en poids.

4. Composition selon la revendication 1, 2 ou 3, caractérisée en ce que les principes actifs sont dissous dans de l'eau contenant de l'hydroxyde de sodium, les principes actifs demeurant ainsi bien dissous.

5. Utilisation de la composition selon l'une quelconque des revendications 1 à 4 pour protéger le bois coupé de la moisissure et de la pourriture bleue.

6. Utilisation de la composition selon l'une quelconque des revendications 1 à 4 pour la protection des séchoirs de scieries contre les attaques des moisissures.
